# NEW EUROPEAN PATENT SPECIFICATION

(11) **EP 0 738 692 B2**
(45) Date of publication and mention of the opposition decision: **19.12.2001**
(45) Mention of the grant of the patent: 30.07.1997
(21) Application number: 96112380.9
(22) Date of filing: 24.05.1995
(51) Int. Cl.: C03C 13/00

(54) **Glass-fiber compositions**
Glasfaserzusammensetzungen
Compositions de fibres de verre

(30) Priority: 28.05.1994 DE 4418726
(43) Date of publication of application: 23.10.1996
(62) Divisional of application: 95921757.1
(73) Proprietor: SAINT-GOBAIN ISOVER, 92400 Courbevoie (FR)
(72) Inventor: De Meringo, Alain, 75005 Paris (FR); Battigelli, Jean, 60290-Rantigny (FR); Furtak, Hans, 67346 Speyer am Rhein (DE)
(74) Representative: Renous Chan, Véronique

(56) References cited:
- EP-A- 0 412 878
- EP-A- 0 588 251
- EP-A- 0 711 256
- EP-A- 0 711 257
- EP-A- 0 711 258
- GB-A- 811 243
- GB-A- 1 096 465
- US-A- 5 055 428
- GLASTECHNISCHE BERICHTE, vol. 64, no. 1, 1 January 1991, pages 16-28, XP000178832 POTTER R M ET AL: "GLASS FIBER DISSOLUTION IN A PHYSIOLOGICAL SALINE SOLUTION"
- Product Information brochure "Trennwandplatte TW-1" supplied by Grünzweig and Hartmann AG, dated October 30, 1993
- Ann.Occup.Hyg., vol. 38, no. 6, pages 857-877, 1994, published by S.M. Mattson

## Description

The present invention relates to a glass-fiber composition that is biologically degradable.

The prior art describes some glass-fiber compositions which are said to be biologically degradable.

The biological degradability of glass-fiber compositions is of great importance because various studies point out that some glass fibers with very small diameters in the range of less than 3 microns may be carcinogenic, while biologically degradable glass fibers of such dimensions show no carcinogenicity.

However not only the biological degradability is of crucial importance but also the mechanical and thermal properties of the glass fibers, or the products produced therefrom, the resistance of the glass fibers and the processibility of the glass-fiber composition. For example glass fibers are used to a great extent for insulation purposes. For these applications sufficient moisture-resistance is necessary.

Also, the glass-fiber composition must permit processibility by known methods for producing glass fibers with a small diameter, for example the centrifugal technique, in particular the inner centrifugal technique (this technique is described for example in US-PS 4 203 745).

GB-A-1 096 465 discloses compositions for the manufacture of glass and glass-fibers which comprise silica, boron oxide, calcium oxide and sodium oxide.

The report published in "Glastechnische Berichte", vol. 64, no. 1 (1991) presents compositions which consist of SiO₂, Al₂O₃, CaO, MgO, Na₂O, B₂O₃ and other oxides as optional ingredients and their dissolution rates under conditions approximating those thought to exist in the lung.

Inorganic fibers which are degradable or biosoluble in physiological media are disclosed in EP-A-0 412 878, US-A-5 055 428 and EP-A-0 588 251. These fibers comprise silica, alkaline earth oxide, alkali oxide and boron oxide. The fibers according to EP-A-0 588 251 furthermore contain zirconium oxide as compulsory ingredient.

The invention is based on the problem of providing a novel glass-fiber composition that is characterized by biological degradability, has good stability or resistance to moisture and is easy to process.

The invention is based on the finding that this problem can be solved by a glass-fiber composition that contains considerable amounts of alkali oxides and boron oxide, as well as aluminum oxide.

It has turned out that such a glass-fiber composition fulfills the combination of the necessary properties, namely biological degradability, resistance to moisture and good processibility.

The object of the invention is a glass-fiber composition that is biologically degradable, consisting susbstantially of the following constituents in percent by weight:

| | |
|---|---|
| SiO₂ | 45 to less than 57 |
| Al₂O₃ | less than 2 and at least 0.5 |
| CaO + MgO | 10 to 16 |
| Na₂O + K₂O | 18 to 23 |
| B₂O₃ | 10 to 12 |

The inventive glass-fiber compositions are processible by the centrifugal technique. The obtained fibers have good resistance to moisture. Surprisingly enough, the glass-fiber compositions show biological degradability. The mean fiber diameter is preferably less than 10 microns and is in particular between 2.5 and 5 microns.

The inventive glass-fiber compositions preferably have the following constituents in percent by weight:

| | |
|---|---|
| SiO₂ | 45 to less than 57 |
| Al₂O₃ | less than 2 and at least 0.5 |
| CaO + MgO | 10 to 16 |
| Na₂O + K₂O | more than 18 |
| B₂O₃ | less than 12 |

According to a further preferred embodiment the inventive glass-fiber compositions have less than 56.5 percent by weight silicon dioxide.

By adding aluminum oxide one can obtain an improvement in moisture-resistance. The inventive compositions are therefore given at least 0.5 percent by weight, and usually less than 1.5 percent by weight aluminum oxide.

According to a further preferred embodiment the composition contains less than 2 percent by weight magnesium oxide.

The moisture-resistance of the inventive glass-fiber compositions was determined by a standard method known as the DGG method. In the DGG method 10 g finely ground glass with a grain size between about 360 and 400 microns is held at the boiling point for five hours in 100 ml water. After quick cooling of the material the solution is filtered and a certain volume of the filtrate evaporated to dryness. The weight of the thus obtained dry material permits the amount of glass dissolved in the water to be calculated. The amount is stated in milligrams per gram of tested glass.

The biological degradability of the inventive glass compositions was tested by introducing 1 g of the glass powder, as described for the DGG method, into a physiological solution with the composition stated below and a pH value of 7.4:

| | |
|---|---|
| NaCl | 6.78 |
| NH₄Cl | 0.535 |
| NaHCO₃ | 2.268 |
| NaH₂PO₄H₂O | 0.166 |
| (Na₃ citrate) 2H₂O | 0.059 |
| Glycine | 0.450 |
| H₂SO₄ | 0.049 |
| CaCl₂ | 0.022 |

Dynamic test conditions were selected as are described in Scholze and Conradt. The flow rate was 300 ml/day. The duration of the test was 14 days The results are stated as percent of SiO₂ in the solution x 100 after 14 days.

The invention shall be described in more detail in the following with reference to examples.

### Example 1

A glass of the following composition in percent by weight was melted:

| | |
|---|---|
| SiO₂ | 56.0 |
| Al₂O₃ | 1.0 |
| CaO | 9.0 |
| MgO | 4.0 |
| Na₂O | 18.0 |
| K₂O | 1.0 |
| B₂O₃ | 10.5 |
| Diverse | 0.5. |

These glass compositions could be processed by the centrifugal technique.

Using the above-described DGG method a value of 40 mg/g was determined.

The above-described test for biological degradability yielded a value of 550.

## Claims

1. A glass-fiber composition that is biologically degradable, consisting substantially of the following constituents in percent by weight :
| | |
|---|---|
| SiO₂ | 45 to less than 57 |
| Al₂O₃ | less than 2 and at least 0.5 |
| CaO + MgO | 10 to 16 |
| Na₂O + K₂O | 18 to 23 |
| B₂O₃ | 10 to 12 |

2. The glass-fiber composition of claim 1, consisting substantially of the following constituents in percent by weight:
| | |
|---|---|
| SiO₂ | 45 to less than 57 |
| Al₂O₃ | less than 2 and at least 0.5 |
| CaO + MgO | 10 to 16 |
| Na₂O + K₂O | more than 18 |
| B₂O₃ | less than 12 |

3. The glass-fiber composition of claim 1, consisting substantially of the following constituents in percent by weight:
| | |
|---|---|
| SiO₂ | 47 to less than 57 |
| Al₂O₃ | less than 2 and at least 0.5 |
| CaO + MgO | 12 to 15 |
| Na₂O + K₂O | 18 to 20 |
| B₂O₃ | 10 to 12 |

4. The glass-fiber composition of claim 1, consisting substantially of the followings constituents in percent by weight:
| | |
|---|---|
| SiO₂ | 52 to less than 57 |
| Al₂O₃ | 0.5 to 1.5 |
| CaO + MgO | 11 to 12.5 |
| Na₂O + K₂O | 18 to 18.5 |
| B₂O₃ | 10 to 12 |

5. The glass-fiber composition of any of claims 1 to 4, ***characterized in that*** the content of silicon dioxide is less than 56.5 percent by weight.

6. The glass-fiber composition of any of claims 1 to 6, ***characterized in that*** the content of magnesium oxide is less than 2 percent by weight.

## Patentansprüche

1. Glasfaserzusammensetzung, die biologisch abbaubar ist, gebildet im wesentlichen durch die folgenden Bestandteile in Gewichtsprozent:
| | |
|---|---|
| SiO₂ | 45 bis weniger als 57 |
| Al₂O₃ | weniger als 2 und zumindest 0,5 |
| CaO + MgO | 10 bis 16 |
| Na₂O + K₂O | 18 bis 23 |
| B₂O₃ | 10 bis 12 |

2. Glasfaserzusammensetzung nach Anspruch 1, gebildet im wesentlichen durch die folgenden Bestandteile in Gewichtsprozent:
| | |
|---|---|
| SiO₂ | 45 bis weniger als 57 |
| Al₂O₃ | weniger als 2 und zumindest 0,5 |
| CaO + MgO | 10 bis 16 |
| Na₂O + K₂O | mehr als 18 |
| B₂O₃ | weniger als 12 |

3. Glasfaserzusammensetzung nach Anspruch 1, gebildet im wesentlichen durch die folgenden Bestandteile in Gewichtsprozent:
| | |
|---|---|
| SiO₂ | 47 bis weniger als 57 |
| Al₂O₃ | weniger als 2 und zumindest 0,5 |
| CaO + MgO | 12 bis 15 |
| Na₂O + K₂O | 18 bis 20 |
| B₂O₃ | 10 bis 12 |

4. Glasfaserzusammensetzung nach Anspruch 1, gebildet im wesentlichen durch die folgenden Bestandteile in Gewichtsprozent:
| | |
|---|---|
| SiO₂ | 52 bis weniger als 57 |
| Al₂O₃ | 0,5 bis 1.5 |
| CaO+MgO | 11 bis 12.5 |
| Na₂O + K₂O | 18 bis 18.5 |
| B₂O₃ | 10 bis 12 |

5. Glasfaserzusammensetzung nach einem der Ansprüche 1 bis 4, **dadurch gekennzeichnet, daß** der Gehalt an Siliciumdioxid weniger als 56.5 Gewichtsprozent beträgt.

6. Glasfaserzusammensetzung nach einem der Ansprüche 1 bis 6, **dadurch gekennzeichnet, daß** der Gehalt an Magnesiumoxid weniger als 2 Gewichtsprozent beträgt.

## Revendications

1. Composition à base de fibres de verre, biologiquement dégradable, **caractérisée en ce qu**'elle est constituée substantiellement des constituants suivants, en pourcentage massique :
| | |
|---|---|
| SiO₂ | 45 à moins de 57 |
| Al₂O₃ | moins de 2 et au moins 0,5 |
| CaO + MgO | 10 à 16 |
| Na₂O + K₂O | 18 à 23 |
| B₂O₃ | 10 à 12 |

2. Composition à base de fibres de verre selon la revendication 1, **caractérisée en ce qu**'elle est constituée substantiellement des constituants suivants, en pourcentage :
| | |
|---|---|
| SiO₂ | 45 à moins de 57 |
| Al₂O₃ | moins de 2 et au moins 0,5 |
| CaO + MgO | 10 à 16 |
| Na₂O + K₂O | plus de 18 |
| B₂O₃ | moins de 12 |

3. Composition à base de fibres de verre selon la revendication 1, **caractérisée en ce qu**'elle est constituée substantiellement des constituants suivants, en pourcentage massique:
| | |
|---|---|
| SiO₂ | 47 à moins de 57 |
| Al₂O₃ | moins de 2 et au moins 0,5 |
| CaO + MgO | 12 à 15 |
| Na₂O + K₂O | 18 à 20 |
| B₂O₃ | 10 à 12 |

4. Composition à base de fibres de verre selon la revendication 1, **caractérisée en ce qu**'elle est constituée substantiellement des constituants suivants, en pourcentage massique :
| | |
|---|---|
| SiO₂ | 52 à moins de 57 |
| Al₂O₃ | 0,5 à 1,5 |
| CaO + MgO | 11 à 12,5 |
| Na₂O + K₂O | 18 à 18,5 |
| B₂O₃ | 10 à 12 |

5. Composition à base de fibres de verre selon l'une quelconque des revendications 1 à 4, **caractérisée en ce que** la teneur en dioxyde silicium est inférieure à 56,5 % en poids.

6. Composition à base de fibres de verre selon l'une quelconque des revendications 1 à 5, **caractérisée en ce que** la teneur en oxyde de magnésium est inférieure à 2 % en poids.
